# EUROPEAN PATENT APPLICATION

(11) **EP 4 837 769 A1**
(43) Date of publication of application: **11.11.2026**
(21) Application number: 25174174.0
(22) Date of filing: 05.05.2025
(51) Int. Cl.: B60L 15/00, B60L 15/02, B60L 15/08, B60L 15/20, H02M 1/44, H02M 7/487, H02M 7/5395

(54) **METHOD AND SYSTEM FOR CONTROLLING A MULTI-LEVEL INVERTER IN AN ELECTRIC DRIVE UNIT**

(71) Applicant: VOLVO CAR CORPORATION, 405 31 Göteborg (SE)
(72) Inventor: MOABBER, Kooros, 431 45 MÖLNDAL (SE); BHAT, Vishal Rajesh, 415 32 GÖTEBORG (SE)
(74) Representative: Kransell & Wennborg KB

(57) **Abstract**

A computer implemented method for controlling a multi-level inverter in an electric drive unit (EDU), the inverter being operable in both two-level and three-level modes, the method comprising, by computer system processing circuitry: acquiring (100) a torque-speed operating point; determining (102) a key performance index (KPI) parameter describing at least one of efficiency, total harmonic distortion (THD), electromagnetic interference (EMI), and neutral point voltage ripple; selecting (104), in response to the acquired torque-speed operating point and the determined key performance index parameter, a pulse width modulation technique of the inverter from among a plurality of techniques including three-level space vector pulse width modulation (SVPWM), three-level discontinuous pulse width modulation (DPWM), and two-level generalized discontinuous pulse width modulation (GDPWM); and controlling (106) the multi-level inverter to operate in an inverter operation mode using the selected pulse width modulation technique at the acquired torque-speed operating point.

## Description

### TECHNICAL FIELD

The present disclosure relates to a method and system for controlling a multi-level inverter in an electric drive unit. In particular, the present disclosure relates to a hybrid modulation method for controlling a multi-level inverter.

### BACKGROUND

Electric drive units (EDUs) for automotive applications commonly utilize power electronic converters, such as inverters, to supply alternating current (AC) to electric machines from a direct current (DC) source. In particular, multi-level inverters have gained prominence due to their ability to generate higher-quality voltage waveforms, thereby improving overall system efficiency and reducing stress on motor windings. These inverters are typically employed in electric vehicles (EVs) and hybrid electric vehicles (HEVs) where performance, efficiency, and electromagnetic compatibility are critical.

However, operating multi-level inverters across the diverse torque-speed range of an electric drive system presents several challenges. Key performance indicators such as power conversion efficiency, total harmonic distortion (THD) of the output currents, electromagnetic interference (EMI) and neutral point voltage stability must be managed carefully to ensure reliable and efficient operation. Various pulse width modulation techniques have been developed to address these challenges, yet optimizing these indicators simultaneously across all operating conditions remains complex.

### SUMMARY

In general, the disclosed subject matter relates to methods and systems for controlling multi-level inverters in electric drive units (EDUs), particularly focusing on dynamically adapting inverter operation and modulation techniques based on real-time operating conditions to optimize key performance attributes such as efficiency, total harmonic distortion (THD), electromagnetic interference (EMI), and neutral point voltage ripple.

According to a first aspect of the invention, there is provided a computer implemented method for controlling a multi-level inverter in an electric drive unit (EDU), the inverter being operable in both two-level and three-level modes, the method comprising, by computer system processing circuitry: acquiring a torque-speed operating point; determining a key performance index (KPI) parameter describing at least one of efficiency, total harmonic distortion (THD), electromagnetic interference (EMI), and neutral point voltage ripple; selecting, in response to the acquired torque-speed operating point and the determined key performance index parameter, a pulse width modulation technique of the inverter from among a plurality of techniques including three-level space vector pulse width modulation (SVPWM), three-level discontinuous pulse width modulation (DPWM), and two-level generalized discontinuous pulse width modulation (GDPWM); and controlling the multi-level inverter to operate in an inverter operation mode using the selected pulse width modulation technique at the acquired torque-speed operating point.

The technical problem addressed by the invention is that conventional control strategies for multi-level inverters are generally static and do not dynamically adapt the inverter operation and modulation method to optimize different performance criteria across varying torque-speed conditions. Existing approaches often apply a single modulation technique or inverter mode regardless of changes in load, speed, or drive cycle conditions, leading to suboptimal efficiency, increased harmonic distortion, greater electromagnetic interference, and potential neutral point voltage instabilities.

The solution to the problem lies in dynamically acquiring the real-time torque-speed operating point and determining a KPI parameter that reflects prioritized performance aspects such as efficiency, THD, EMI, or neutral point voltage ripple. Based on the KPI and the current operating point, the method selects and applies an appropriate pulse width modulation technique from a set of candidate methods tailored for either two-level or three-level inverter operation. This ensures that the inverter continuously operates in a manner that is optimized for the current system conditions, rather than adhering to a fixed control strategy.

Advantageous effects of the invention include the ability to achieve global optimization of inverter performance across a wide torque-speed range, leading to improved energy efficiency of the electric drive unit, reduced harmonic content in the output currents, minimized electromagnetic interference-wherein common-mode voltage noise is directly related to EMI- and enhanced control of the neutral point voltage ripple in three-level inverter configurations. Accordingly, the described method enables a hybrid pulse width modulation approach, wherein two-level and three-level inverter operations are dynamically combined with the selection of different modulation techniques to continuously optimize key performance indicators such as efficiency, total harmonic distortion, electromagnetic interference, and neutral point voltage ripple across the full torque-speed operating range, thereby improving adaptability, energy savings, and system robustness compared to conventional static modulation methods. Moreover, the described modulation method can be used in both a generative and a regenerative mode of an electric machine.

According to an example, selecting the inverter operation mode comprises matching the torque-speed operating point to a predetermined torque-speed map for at least one predetermined key performance index parameter. By matching the operating point to a predefined map, the system can efficiently identify the most suitable inverter operation mode without complex calculations in real time. This promotes faster control decisions, reduces processor workload, and enables consistent inverter behavior based on validated offline optimization for specific performance targets

According to an example, determining a key performance index parameter comprises determining a weighted key performance index parameter where each of efficiency, total harmonic distortion, electromagnetic interference, and neutral point voltage ripple is given a relative weight. The use of a weighted KPI structure allows the inverter control system to balance multiple competing performance demands. Moreover, a weighted KPI introduces flexibility to prioritize attributes depending on external requirements, such as customer preferences, legal standards, or specific drive cycle targets, thereby enabling a customized optimization strategy for different operational scenarios.

According to an example, the weight of at least one key performance index parameter is adapted in real-time. Real-time adaptation of KPI weights ensures that the inverter control strategy remains responsive to varying vehicle conditions or driving styles. For instance, the KPI weights may be shifted to a higher weight on efficiency when a driver selects an "Economy" driving mode of the vehicle.

According to an example, selecting the pulse width modulation technique comprises matching the torque-speed operating point to a predetermined torque-speed map for a given weighted key performance index parameter. Employing a predetermined map for weighted KPI optimization simplifies real-time decision-making, ensuring rapid selection of the most appropriate modulation strategy.

According to an example, selecting the pulse width modulation technique comprises selecting three-level space vector pulse width modulation (SVPWM) when reduction of current total harmonic distortion (THD) and maximization of efficiency in the electric drive unit are prioritized at the torque-speed operating point. Using three-level SVPWM under these conditions improves current waveform quality while simultaneously reducing EDU losses, contributing directly to higher system efficiency. The improved harmonic performance also benefits motor lifetime and electromagnetic compatibility.

According to an example, selecting the pulse width modulation technique comprises selecting three-level discontinuous pulse width modulation (DPWM) when maximization of efficiency and minimization of electromagnetic interference (EMI) are prioritized at the torque-speed operating point. Adopting three-level DPWM in high-priority EMI-sensitive zones allows substantial switching loss reductions and lowers common mode voltage noise, directly addressing EMI emissions. This results in improved compliance with electromagnetic compatibility standards and enhanced overall drive unit efficiency.

According to an example, selecting the pulse width modulation technique comprises selecting two-level generalized discontinuous pulse width modulation (GDPWM) to maximize efficiency when the torque-speed operating point corresponds to a high torque, low speed region. Deploying two-level GDPWM during high-torque, low-speed operation helps minimize switching losses where the inverter is heavily loaded, leading to better thermal management and improved overall system reliability in demanding load conditions. Here, high-speed and low torque should be seen in relation to a given torque-speed map as a whole, where high speed for example can be considered to relate to a speed above 50% of a highest speed and a low torque can be considered to be a torque below 50% of a max torque in the torque speed map. Other thresholds can also be set to suit any given implementation.

According to an example, the method according to any one of the preceding claims, wherein the multi-level inverter comprises a T-Type Neutral Point Clamped (TNPC) topology. Integrating a TNPC topology leverages its inherent advantages in balancing switching losses, voltage stress, and harmonic performance in three-level inverter configurations, offering an effective compromise between system cost, complexity, and performance. Moreover, the TNPC topology allows both 2-level and 3-level modulation. It would also be possible to implement the described method using other three-level inverter topologies.

According to an example, the method may further comprise dynamically changing between the plurality of pulse width modulation techniques in response to a change in operating point of the EDU within a torque-speed range. Allowing dynamic switching between modulation techniques provides a powerful way to maintain optimal system behavior across all driving conditions. It ensures that the inverter consistently operates in a regime that best matches the instantaneous demands on the electric drive unit.

According to an example, selecting a pulse width modulation technique of the inverter for the torque-speed operating point comprises evaluating the key performance index (KPI) parameter for each available modulation technique at the operating point by simulating or retrieving performance data for each modulation technique at the torque-speed operating point, the performance data comprising values of efficiency, total harmonic distortion (THD), and neutral point voltage ripple. Using simulation or pre-retrieved performance data allows faster and more accurate determination of the optimal modulation technique without relying solely on simplified real-time models, thereby enhancing the fidelity and responsiveness of the inverter control strategy.

According to an example, selecting a pulse width modulation technique of the inverter for the torque-speed operating point comprises matching the torque-speed operating point to a precomputed look-up table that associates each torque-speed region with a preferred modulation technique based on optimization of at least one key performance index parameter. Precomputed look-up tables offer a low-latency decision-making tool for modulation selection, reducing the need for intensive computation during operation while maintaining a high degree of optimization based on offline analysis or empirical data.

According to an example, selecting the modulation technique further comprises calculating a predicted KPI value for each modulation technique at the torque-speed operating point using stored characteristic models of the inverter and electric drive unit, comparing the predicted KPI values, and selecting the modulation technique that results in a KPI value within a predefined range. Predicting KPI values using stored models enables more precise and context-aware control decisions by incorporating inverter and machine behavior directly into the modulation selection process. This improves operational consistency and allows fine-tuned performance adaptation across a wide range of conditions.

According to an example, the KPI parameter is continuously monitored during operation, and the modulation technique is dynamically adjusted if the KPI parameter deviates from an acceptable threshold. Continuous KPI monitoring and dynamic adjustment ensure that system performance remains within predefined acceptable limits even in the presence of disturbances, aging effects, or external variations, thereby improving reliability of the electric drive system.

There is also provided a computer program product comprising program code for performing, when executed by the processing circuitry, the method of any of the examples, and a non-transitory computer-readable storage medium comprising instructions, which when executed by the processing circuitry, cause the processing circuitry to perform the method of any of the examples.

According to a second aspect, there is provided a computer system for controlling a multi-level inverter in an electric drive unit (EDU), the inverter being operable in both two-level and three-level modes, the computer system comprising processing circuitry configured to: acquire a torque-speed operating point; determine a key performance index (KPI) parameter describing at least one of efficiency, total harmonic distortion (THD), electromagnetic interference (EMI), and neutral point voltage ripple; select, in response to the acquired torque-speed operating point and the determined key performance index parameter, a pulse width modulation technique of the inverter from among a plurality of techniques including three-level space vector pulse width modulation (SVPWM), three-level discontinuous pulse width modulation (DPWM), and two-level generalized discontinuous pulse width modulation (GDPWM); and controlling the multi-level inverter to operate in the selected inverter operation mode using the selected pulse width modulation technique at the acquired torque-speed operating point.

Effects and features of this second aspect are largely analogous to those described above in connection with the first aspect.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

These and other aspects of the present invention will now be described in more detail, with reference to the appended drawings showing examples, wherein:
Fig. 1 is a flow chart outlining steps of a method according to an example;
Fig. 2 is an example torque-speed map;
Fig. 3 is a flow chart illustrating a method according to an example;
FIG. 4 is a schematic diagram of a computer system for implementing examples disclosed herein.

### DETAILED DESCRIPTION

In the present detailed description, various embodiments of the method for controlling a multi-level inverter in an electric drive unit (EDU) will be discussed.

The disclosed subject matter relates to methods for dynamically controlling a multi-level inverter in an electric drive unit (EDU), aiming to optimize inverter operation across the full torque-speed range by adjusting inverter modulation strategies according to key performance criteria. The control is executed by a computer system having processing circuitry that may respond in real-time to changes in driving conditions.

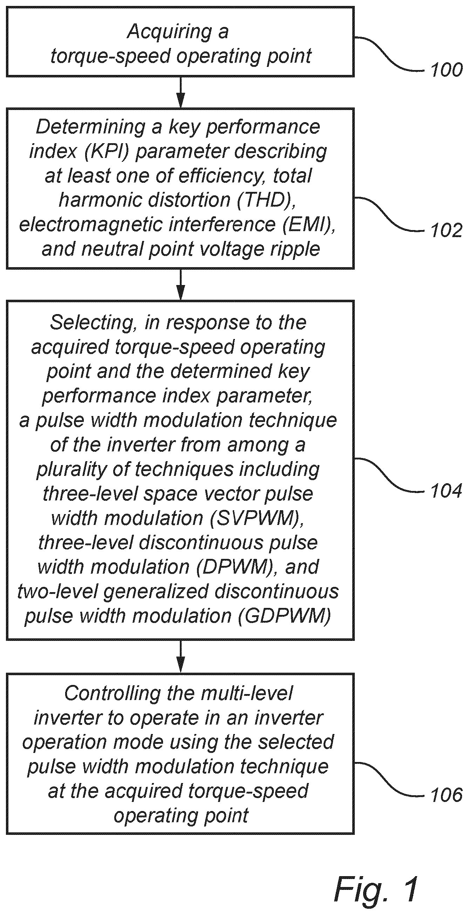

As illustrated in Fig. 1, the method begins with acquiring 100 a torque-speed operating point of the EDU. The operating point reflects the instantaneous mechanical load and speed requirements of the vehicle, which significantly influence the electrical and thermal behavior of the inverter and electric machine.

Next, a key performance index (KPI) parameter is determined 102. The KPI parameter may describe at least one of the following attributes: efficiency, total harmonic distortion (THD), electromagnetic interference (EMI), or neutral point voltage ripple. Each KPI reflects an aspect of inverter and motor performance. Efficiency relates to minimizing energy losses, THD measures the purity of the inverter's output waveform, EMI typically relates to common mode voltage noise that can interfere with vehicle electronics, and neutral point voltage ripple affects voltage balancing and long-term component reliability. In some embodiments, a weighted KPI may be determined, where relative importance is assigned to each individual KPI depending on operating conditions, vehicle drive mode (e.g., economy, sport), or legal and customer-specific targets.

Following the KPI determination, the method proceeds to selecting 104 a pulse width modulation (PWM) technique based on the acquired torque-speed operating point and the KPI parameter. The PWM technique is selected from among multiple candidate techniques: three-level space vector pulse width modulation (SVPWM), three-level discontinuous pulse width modulation (DPWM), and two-level generalized discontinuous pulse width modulation (GDPWM). Each of these techniques offers advantages under different operating conditions. For example, SVPWM provides reduced THD, particularly suited for medium-speed, low-torque regions. A reduction in THD in turn improves efficiency. DPWM methods reduce switching losses and EMI, and are advantageous at high speeds. GDPWM, combining different DPWM variants, is preferred for maximizing efficiency at high torque, low-speed conditions. By dynamically choosing between these PWM techniques, the system implements a hybrid modulation strategy.

Finally, the multi-level inverter is controlled 106 to operate in an inverter operation mode using the selected pulse width modulation technique at the acquired torque-speed operating point. This real-time control ensures that the inverter adapts its switching and voltage shaping behavior dynamically to optimize the targeted KPIs under current load and speed conditions.

The disclosed method leverages a hybrid pulse width modulation approach, which integrates the benefits of two-level and three-level operation along with dynamic pulse width modulation selection to optimize inverter performance across the EDU's operating map. Using TNPC inverter topology enables flexible switching between two-level and three-level modes without additional complexity, further enhancing system efficiency and harmonic performance.

In comparison to systems applying a single modulation strategy across all conditions, the hybrid approach continuously adapts based on real-time data, simulation-derived look-up tables, and/or predictive modeling, thereby achieving improvements in inverter loss and THD. By dynamically balancing efficiency, harmonic distortion, EMI, and neutral point stability, the method may significantly improve the overall energy efficiency, electromagnetic compatibility, and reliability of the electric drive system.

Different pulse width modulation (PWM) methodologies can be employed in multi-level inverter systems to optimize electric drive unit (EDU) performance, particularly across varying torque-speed operating points. Among these, space vector pulse width modulation (SVPWM) and discontinuous pulse width modulation (DPWM) techniques may enhancing the operational characteristics of the inverter.

SVPWM may lead to reduced harmonic distortion in the inverter output currents and can lower electromagnetic interference (EMI) levels, particularly in specific regions of the torque-speed operating map. SVPWM achieves a more efficient DC bus voltage utilization compared to traditional sinusoidal PWM methods, providing improvements in inverter output quality and overall system efficiency.

Discontinuous pulse width modulation (DPWM) techniques, including variants such as DPWM0, DPWM1, and DPWM2, are designed to reduce switching losses by turning off certain inverter transistors for a portion of the switching cycle. Each DPWM variant defines a unique strategy for injecting a zero-sequence voltage into the modulation process. These strategies selectively clamp one phase to the DC bus voltage for certain intervals, thereby reducing the switching events and improving inverter efficiency. However, while switching loss reduction is achieved, an increase in total harmonic distortion of the output currents (THDi) may occur in specific torque-speed regions.

DPWM0 and DPWM1 offer improvements in switching loss reduction while maintaining moderate THDi performance. DPWM2 may provide even greater switching loss reduction, with some trade-offs in terms of increased harmonic distortion and EMI levels. In practical systems, the choice among these DPWM methods depends on the phase angle between voltage and current, commonly referred to as the power factor.

Generalized Discontinuous Pulse Width Modulation (GDPWM) further enhances the flexibility of discontinuous modulation by dynamically combining the characteristics of DPWM0, DPWM1, and DPWM2. GDPWM adapts based on the instantaneous operating conditions, such as the phase angle, to optimize both the switching loss function and harmonic performance simultaneously. When appropriately implemented, GDPWM can achieve switching loss reductions of up to approximately 50% compared to SVPWM, particularly in phase angle ranges typical for electric drive unit operation.

Each modulation method may inject a distinct form of zero-sequence voltage into the reference signals, shifting the operation of the inverter to achieve the desired balance between switching frequency, loss reduction, harmonic distortion, and EMI suppression.

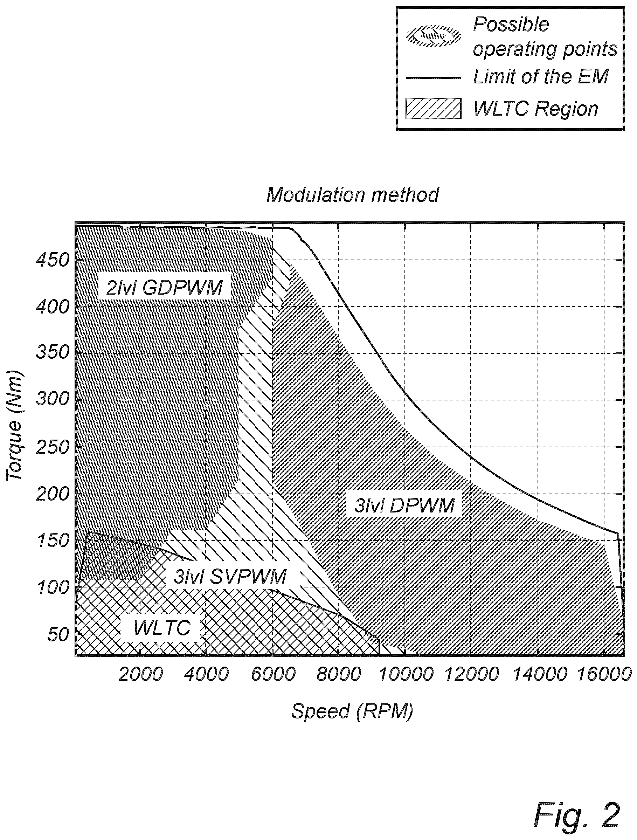

According to some embodiments, the selection of the inverter operation mode may be based on mapping the torque-speed operating point to a predetermined torque-speed map associated with at least one key performance index (KPI) parameter. As illustrated in Fig. 2, such a torque-speed map may define preferred inverter operation modes and modulation strategies for different regions of the EDU's operational envelope for a given KPI or weighted KPI. For example, two-level inverter operation may be prioritized in regions of high torque and low to medium speed, while three-level operation may dominate in regions requiring reduced harmonic content or improved electromagnetic compatibility. The predetermined map may be derived from simulation or empirical measurement, and enables fast, consistent selection of inverter mode based on the real-time operating point, without requiring complex on-board computations. The modulation method selection strategy illustrated in Fig. 2 is related to a predetermined KPI or weighted KPI, and the selection strategy may change accordingly as a result of a change in in KPI or in the weights of a weighted KPI.

In further embodiments, the KPI parameter used for control decision-making may be a weighted combination of multiple individual KPIs. That is, each of efficiency, total harmonic distortion (THD), electromagnetic interference (EMI), and neutral point voltage ripple may be assigned a respective weight to reflect its importance under current vehicle operating conditions. The resulting combined metric, referred to as a weighted or unit KPI, guides the modulation selection. For example, in operating regions corresponding to standardized drive cycles such as WLTC, higher weighting may be assigned to efficiency (e.g., 70%) with lower relative weights assigned to THD and EMI. For example, weighting may be performed by assigning individual wights to the respective KPIs so that the sum of the weights is 100%. The skilled person realizes that there are also other methods of weighting the relevant KPI parameters that can be used, and in some examples, not all KPI parameters have to be included in a weighted KPI. The use of a weighted KPI permits trade-offs between conflicting performance goals and enables the system to remain adaptive to both real-time conditions and preconfigured objectives.

In some implementations, the weight assigned to at least one of the KPI parameters may be dynamically adapted in real-time. This enables the inverter control system to respond to transient operational demands, external inputs, or changes in driving mode. For instance, switching from a normal drive mode to a sport mode may reduce the weight assigned to efficiency and increase the weight for THD minimization, optimizing for responsiveness and current quality. Conversely, in an economy mode, efficiency may be prioritized. The dynamic adaptation of weights allows the KPI optimization target to shift in accordance with broader vehicle control strategies, environmental conditions, or driver-selected profiles.

In certain embodiments, the selection of the pulse width modulation technique may also be based on the torque-speed map for a given weighted KPI parameter. Again referring to Fig. 2, different torque-speed regions are associated with different optimal modulation strategies. For example, three-level SVPWM may be selected in regions corresponding to low torque and medium speed, while GDPWM may be favored in high-torque, low-speed zones. Three-level DPWM may be applied at high speeds where switching losses and EMI suppression become more critical. The use of a predefined map facilitates efficient real-time control by pre-associating each region with the modulation strategy that has demonstrated superior performance under simulated or real-world operating conditions, as quantified by the weighted KPI.

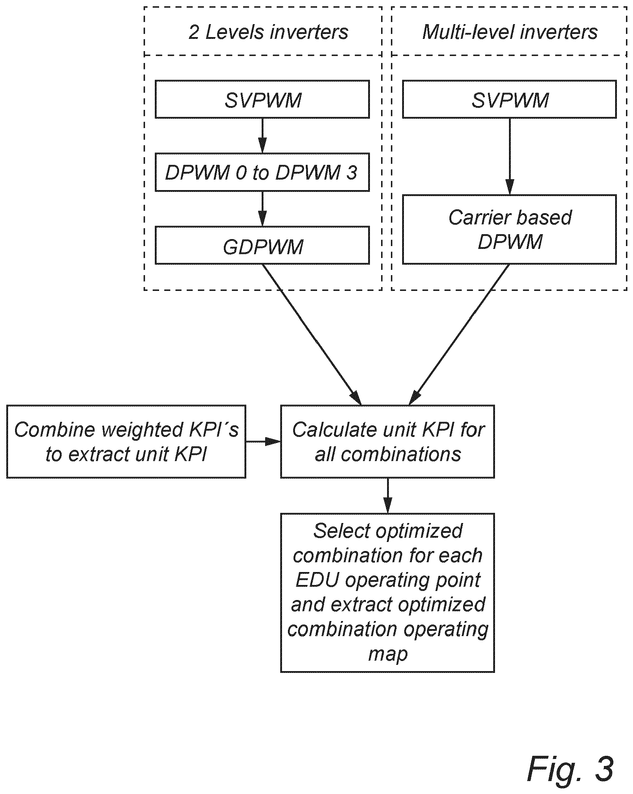

As shown in the example of Fig. 3, a hybrid modulation selection process may be implemented to determine the optimal modulation method and inverter mode for each torque-speed operating point. In the illustrated flow, the process begins with defining and weighting the relevant KPI parameters to generate a single unit KPI. These weights may vary depending on operational priorities and system context, including torque-speed region, voltage level, or driving cycle requirements. A discrete set of representative operating points is then selected across the full torque-speed map, with greater resolution in performance-critical areas if desired. At each operating point, all candidate modulation methods are evaluated-across both two-level and three-level inverter modes-by extracting the corresponding KPI values. The modulation technique and inverter configuration that yields the best unit KPI value is then selected for that specific point. The outcome is a complete modulation map where each region is assigned an optimized control strategy, enabling the EDU to operate in a dynamically optimized manner over all load and speed conditions. This method facilitates real-time execution with minimal computation, relying on pre-evaluated performance data for robust, high-fidelity control.

In some embodiments, the system may be configured to select three-level space vector pulse width modulation (SVPWM) when performance objectives prioritize reduced current total harmonic distortion (THD) and improved efficiency. As indicated in the region of Fig. 2 associated with low to medium speed and low to medium torque, corresponding broadly to typical WLTC drive cycle conditions illustrated in Fig. 2, three-level SVPWM offers improved waveform quality due to its ability to utilize a higher modulation index. The resulting reduction in current distortion may thereby contribute to overall drive unit efficiency.

In another set of operating conditions, particularly at high speed or in high-switching-frequency regimes, the system may instead select three-level discontinuous pulse width modulation (DPWM) when efficiency maximization and electromagnetic interference (EMI) reduction are the primary concerns. As shown in Fig. 2, high-speed operation typically leads to increased switching activity, which can elevate inverter losses and generate undesirable EMI. The application of three-level DPWM in these regions limits the number of active switching events by clamping one phase during a portion of the cycle, thereby significantly reducing switching losses. Additionally, this modulation pattern reduces common-mode voltage transitions, contributing to lower EMI emissions and improved compliance with vehicle-level electromagnetic compatibility standards.

According to further embodiments, the system may select two-level generalized discontinuous pulse width modulation (GDPWM) to maximize efficiency when operating in regions of high torque and low speed. This is consistent with the modulation zones illustrated in Fig. 2, where two-level GDPWM has been identified as preferable in areas subject to high inverter current and thermal loading. By combining multiple DPWM variants and adapting to the phase angle between current and voltage, GDPWM can achieve substantial reductions in switching loss while balancing THD performance.

In the present context, a transition between low speed and high speed can be seen as a speed within ± 20% of the base speed, which is the speed where the torque begins to drop off. Moreover, a low torque can be seen as a torque in the range of 20% - 50% of a maximum torque, and a high torque may consequently a torque above 20% - 50% of a max torque.

In certain embodiments, the control system may be configured to dynamically change between the plurality of pulse width modulation (PWM) techniques in response to a change in the operating point of the EDU within the torque-speed range. Rather than remaining locked into a single modulation technique during operation, the inverter can adjust the applied modulation method as the torque or speed conditions shift, ensuring that the control strategy remains continuously optimized according to real-time demands. This dynamic switching capability allows the system to transition, for example, from two-level GDPWM during high-torque, low-speed operation to three-level DPWM at high speeds, as illustrated by the modulation allocation shown in Fig. 2. Such transitions can be executed smoothly based on real-time monitoring of the torque-speed operating point and referenced selection maps or look-up tables.

According to additional embodiments, selecting a PWM technique for the inverter may involve evaluating the key performance index parameter for each available modulation technique at the current torque-speed operating point. In some cases, this evaluation may be performed by simulating the expected inverter behavior for each modulation method or by retrieving precomputed performance data stored in memory. The KPI parameter values, such as efficiency, total harmonic distortion (THD), electromagnetic interference (EMI), and neutral point voltage ripple, are then compared to determine which modulation technique offers the most favorable performance at that point. By considering pre-evaluated data instead of relying solely on simplified real-time models, the system can achieve a higher level of control fidelity and maintain inverter operation within targeted performance limits.

In yet further embodiments, the selection of the PWM technique may be made by matching the torque-speed operating point to a precomputed look-up table that associates each region with a preferred modulation strategy based on KPI optimization. The look-up table may be generated through offline simulation or empirical testing, capturing the performance characteristics of all candidate modulation methods across the full range of EDU operation. By consulting such a table during operation, the control system can make fast, efficient decisions about modulation strategy, reducing computational burden and improving system responsiveness.

Additionally, the control process may involve calculating a predicted KPI value for each modulation technique at the operating point using stored characteristic models of the inverter and electric drive unit. After calculating the predicted KPI values, these are compared, and the modulation technique resulting in a KPI value within a predefined optimal range is selected. This predictive modeling approach further enhances decision-making precision, enabling the system to anticipate how different control strategies would perform under specific conditions without requiring exhaustive real-time measurements.

In some configurations, the KPI parameter is continuously monitored during operation, and the modulation technique is dynamically adjusted if the KPI parameter deviates from an acceptable threshold. Such continuous monitoring ensures that system performance remains within desired operational envelopes even in the presence of environmental changes, aging components, or unforeseen disturbances. If, for example, an increase in THD or neutral point ripple is detected during operation, the system may autonomously switch to a modulation strategy better suited to stabilizing these parameters, thereby maintaining consistent inverter quality and reliability.

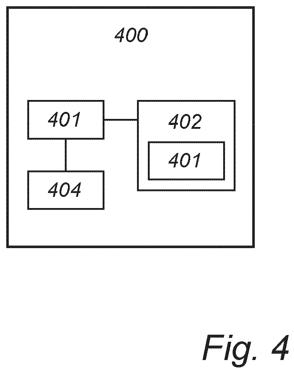

Fig. 4 illustrates a computer system 400 according to an embodiment. The steps of a method performed by the computer system 400 are in practice performed by processing circuitry 401 embodied in the form of one or more microprocessors arranged to execute a computer program 402 downloaded to a non-transitory computer readable storage medium 403 associated with the microprocessor, such as a Random Access Memory (RAM), a Flash memory or a hard disk drive. The processing circuitry 401 is arranged to cause the computer system 400 to carry out the method according to embodiments when the appropriate computer program 402 comprising computer-executable instructions is downloaded to the storage medium 403 and executed by the processing circuitry 401. The storage medium 403 may also be a computer program product comprising the computer program 402. Alternatively, the computer program 402 may be transferred to the storage medium 403 by means of a suitable computer program product, such as a Digital Versatile Disc (DVD) or a memory stick. As a further alternative, the computer program 402 may be downloaded to the storage medium 403 over a network. The processing circuitry 401 may alternatively be embodied in the form of a digital signal processor (DSP), an application specific integrated circuit (ASIC), a field-programmable gate array (FPGA), a complex programmable logic device (CPLD), etc. The computer system 400 further comprises a communication interface 404 (wired or wireless) over which it is configured to transmit and receive data.

Example 1. A computer implemented method for controlling a multi-level inverter in an electric drive unit (EDU), the inverter being operable in both two-level and three-level modes, the method comprising, by computer system processing circuitry: acquiring (100) a torque-speed operating point; determining (102) a key performance index (KPI) parameter describing at least one of efficiency, total harmonic distortion (THD), electromagnetic interference (EMI), and neutral point voltage ripple; selecting (104), in response to the acquired torque-speed operating point and the determined key performance index parameter, a pulse width modulation technique of the inverter from among a plurality of techniques including three-level space vector pulse width modulation (SVPWM), three-level discontinuous pulse width modulation (DPWM), and two-level generalized discontinuous pulse width modulation (GDPWM); and controlling

(106) the multi-level inverter to operate in an inverter operation mode using the selected pulse width modulation technique at the acquired torque-speed operating point.

Example 2. The method according to example 1, wherein selecting the inverter operation mode comprises matching the torque-speed operating point to a predetermined torque-speed map for at least one predetermined key performance index parameter.

Example 3. The method according to example 1 or 2, wherein determining a key performance index parameter comprises determining a weighted key performance index parameter where each of efficiency, total harmonic distortion (THD), electromagnetic interference (EMI), and neutral point voltage ripple is given a relative weight.

Example 4. The method according to example 3, wherein the weight of at least one key performance index parameter is adapted in real-time.

Example 5. The method according to example 3 or 4, wherein selecting the pulse width modulation technique comprises matching the torque-speed operating point to a predetermined torque-speed map for a given weighted key performance index parameter.

Example 6. The method according to any one of the preceding examples, wherein selecting the pulse width modulation technique comprises selecting three-level space vector pulse width modulation (SVPWM) when reduction of current total harmonic distortion (THD) and maximization of efficiency in the electric drive unit are prioritized at the torque-speed operating point.

Example 7. The method according to any one of the preceding examples, wherein selecting the pulse width modulation technique comprises selecting three-level discontinuous pulse width modulation (DPWM) when maximization of efficiency and minimization of electromagnetic interference (EMI) are prioritized at the torque-speed operating point.

Example 8. The method according to any one of the preceding examples, wherein selecting the pulse width modulation technique comprises selecting two-level generalized discontinuous pulse width modulation (GDPWM) to maximize efficiency when the torque-speed operating point corresponds to a high torque, low speed region.

Example 9. The method according to any one of the preceding examples, wherein the multi-level inverter comprises a T-Type Neutral Point Clamped (TNPC) topology.

Example 10. The method according to any one of the preceding examples, further comprising dynamically changing between the plurality of pulse width modulation techniques in response to a change in operating point of the EDU within a torque-speed range.

Example 11. The method according to any one of the preceding examples, wherein selecting a pulse width modulation technique of the inverter for the torque-speed operating point comprises evaluating the key performance index (KPI) parameter for each available modulation technique at the operating point by simulating or retrieving performance data for each modulation technique at the torque-speed operating point, the performance data comprising values of efficiency, total harmonic distortion (THD), electromagnetic interference (EMI), and neutral point voltage ripple.

Example 12. The method according to any one of the preceding examples, wherein selecting a pulse width modulation technique of the inverter for the torque-speed operating point comprises matching the torque-speed operating point to a precomputed look-up table that associates each torque-speed region with a preferred modulation technique based on optimization of at least one key performance index parameter.

Example 13. The method according to any one of the preceding examples, wherein selecting the modulation technique further comprises: calculating a predicted KPI value for each modulation technique at the torque-speed operating point using stored characteristic models of the inverter and electric drive unit; comparing the predicted KPI values; and selecting the modulation technique that results in a KPI value within a predefined range.

Example 14. The method according to any one of the preceding examples, wherein the KPI parameter is continuously monitored during operation, and the modulation technique is dynamically adjusted if the KPI parameter deviates from an acceptable threshold.

Example 15. A computer program product comprising program code for performing, when executed by the processing circuitry, the method of any of examples 1 to 14.

Example 16. A non-transitory computer-readable storage medium comprising instructions, which when executed by the processing circuitry, cause the processing circuitry to perform the method of any of examples 1 to 14.

Example 17. A computer system (400) for controlling a multi-level inverter in an electric drive unit (EDU), the inverter being operable in both two-level and three-level modes, the computer system comprising processing circuitry (401) configured to: acquire a torque-speed operating point; determine a key performance index (KPI) parameter describing at least one of efficiency, total harmonic distortion (THD), electromagnetic interference (EMI), and neutral point voltage ripple; select, in response to the acquired torque-speed operating point and the determined key performance index parameter, a pulse width modulation technique of the inverter from among a plurality of techniques including three-level space vector pulse width modulation (SVPWM), three-level discontinuous pulse width modulation (DPWM), and two-level generalized discontinuous pulse width modulation (GDPWM); and controlling the multi-level inverter to operate in the selected inverter operation mode using the selected pulse width modulation technique at the acquired torque-speed operating point.

Various examples have been described. These and other examples are within the scope of the following claims.

## Claims

1. A computer implemented method for controlling a multi-level inverter in an electric drive unit (EDU), the inverter being operable in both two-level and three-level modes, the method comprising, by computer system processing circuitry:
acquiring (100) a torque-speed operating point;
determining (102) a key performance index (KPI) parameter describing at least one of efficiency, total harmonic distortion (THD), electromagnetic interference (EMI), and neutral point voltage ripple;
selecting (104), in response to the acquired torque-speed operating point and the determined key performance index parameter, a pulse width modulation technique of the inverter from among a plurality of techniques including three-level space vector pulse width modulation (SVPWM), three-level discontinuous pulse width modulation (DPWM), and two-level generalized discontinuous pulse width modulation (GDPWM); and
controlling (106) the multi-level inverter to operate in an inverter operation mode using the selected pulse width modulation technique at the acquired torque-speed operating point.

2. The method according to claim 1, wherein selecting the inverter operation mode comprises matching the torque-speed operating point to a predetermined torque-speed map for at least one predetermined key performance index parameter.

3. The method according to claim 1 or 2, wherein determining a key performance index parameter comprises determining a weighted key performance index parameter where each of efficiency, total harmonic distortion (THD), electromagnetic interference (EMI), and neutral point voltage ripple is given a relative weight.

4. The method according to claim 3, wherein the weight of at least one key performance index parameter is adapted in real-time.

5. The method according to claim 3 or 4, wherein selecting the pulse width modulation technique comprises matching the torque-speed operating point to a predetermined torque-speed map for a given weighted key performance index parameter.

6. The method according to any one of the preceding claims, wherein selecting the pulse width modulation technique comprises selecting three-level space vector pulse width modulation (SVPWM) when reduction of current total harmonic distortion (THD) and maximization of efficiency in the electric drive unit are prioritized at the torque-speed operating point.

7. The method according to any one of the preceding claims, wherein selecting the pulse width modulation technique comprises selecting three-level discontinuous pulse width modulation (DPWM) when maximization of efficiency and minimization of electromagnetic interference (EMI) are prioritized at the torque-speed operating point.

8. The method according to any one of the preceding claims, wherein selecting the pulse width modulation technique comprises selecting two-level generalized discontinuous pulse width modulation (GDPWM) to maximize efficiency when the torque-speed operating point corresponds to a high torque, low speed region.

9. The method according to any one of the preceding claims, wherein the multi-level inverter comprises a T-Type Neutral Point Clamped (TNPC) topology.

10. The method according to any one of the preceding claims, further comprising dynamically changing between the plurality of pulse width modulation techniques in response to a change in operating point of the EDU within a torque-speed range.

11. The method according to any one of the preceding claims, wherein selecting a pulse width modulation technique of the inverter for the torque-speed operating point comprises evaluating the key performance index (KPI) parameter for each available modulation technique at the operating point by simulating or retrieving performance data for each modulation technique at the torque-speed operating point, the performance data comprising values of efficiency, total harmonic distortion (THD), electromagnetic interference (EMI), and neutral point voltage ripple.

12. The method according to any one of the preceding claims, wherein selecting a pulse width modulation technique of the inverter for the torque-speed operating point comprises matching the torque-speed operating point to a precomputed look-up table that associates each torque-speed region with a preferred modulation technique based on optimization of at least one key performance index parameter.

13. The method according to any one of the preceding claims, wherein selecting the modulation technique further comprises:
calculating a predicted KPI value for each modulation technique at the torque-speed operating point using stored characteristic models of the inverter and electric drive unit;
comparing the predicted KPI values; and
selecting the modulation technique that results in a KPI value within a predefined range.

14. The method according to any one of the preceding claims, wherein the KPI parameter is continuously monitored during operation, and the modulation technique is dynamically adjusted if the KPI parameter deviates from an acceptable threshold.

15. A computer system (400) for controlling a multi-level inverter in an electric drive unit (EDU), the inverter being operable in both two-level and three-level modes, the computer system comprising processing circuitry (401) configured to:
acquire a torque-speed operating point;
determine a key performance index (KPI) parameter describing at least one of efficiency, total harmonic distortion (THD), electromagnetic interference (EMI), and neutral point voltage ripple;
select, in response to the acquired torque-speed operating point and the determined key performance index parameter, a pulse width modulation technique of the inverter from among a plurality of techniques including three-level space vector pulse width modulation (SVPWM), three-level discontinuous pulse width modulation (DPWM), and two-level generalized discontinuous pulse width modulation (GDPWM); and
controlling the multi-level inverter to operate in the selected inverter operation mode using the selected pulse width modulation technique at the acquired torque-speed operating point.
